# EUROPEAN PATENT SPECIFICATION

(11) **EP 0 857 272 B1**
(45) Date of publication and mention of the grant of the patent: **09.07.2003**
(21) Application number: 96936759.8
(22) Date of filing: 21.10.1996
(51) Int. Cl.: F16L 9/14, F16L 9/12, F16L 9/16, F16L 57/00

(54) **FIRE RESISTANT PIPE**
FEUERFESTE ROHRE
TUYAUTERIE RESISTANT AU FEU

(30) Priority: 25.10.1995 US 548226; 06.05.1996 US 643621
(43) Date of publication of application: 12.08.1998
(73) Proprietor: AMERON INTERNATIONAL CORPORATION, Pasadena, California 91101-2894 (US)
(72) Inventor: FRIEDRICH, Ralph, S., Hermosa Beach, CA 90254 (US); KANE, John, F., Clearwater Beach, FL 34630 (US); FORTUNE, Mark H., El Segundo, CA 90205 (US)
(74) Representative: Enskat, Michael Antony Frank
(86) International application number: US9616813
(87) International publication number: WO97015775

(56) References cited:
- EP-A- 0 240 072
- WO-A-94/25791
- US-A- 3 652 375
- US-A- 4 081 302
- US-A- 4 104 095
- US-A- 4 192 697
- US-A- 4 509 559
- US-A- 4 645 553
- US-A- 4 942 903

## Description

### Field of the Invention

The present invention relates generally to fire resistant pipe and pipe fittings and, more particularly, to a filament wound fiber-reinforced pipe and pipe fittings having one or more surrounding fiber-reinforced resin impregnated layers, which display enhanced fire resistance, burst strength, and impact resistance when compared with conventional fiber-reinforced pipes and pipe fittings.

### Background of the Invention

Pipes and pipe fittings formed from fiber-reinforced plastics have gained widespread acceptance as viable alternatives to their steel counterparts in such applications where cost, weight, and/or chemical resistance is a concern. Conventional fiber-reinforced plastic pipes include a filament component that is wound on a mandrel, and a resin component that is used to bond the filament windings together. The filament winding acts to structurally reinforce the otherwise resin pipe by providing a desired degree of hoop and longitudinal strength to the pipe. The fiber and resin components are selected for one or more desired physical properties, making the pipe particularly adapted to a specific application. Polyester and epoxy resins are typically favored for use in forming such pipes and pipe fittings because of their good weatherability, corrosion, and chemical resistance.

Fiber-reinforced plastic pipes and pipe fittings are used in applications where some degree of temperature resistance is desired as well as weather, corrosion and chemical resistance. An example of one such application is fire fighting piping that is used in industrial plants, offshore platforms and the like. Typically, pipes and pipe fittings used in fire fighting piping must be designed to accommodate and deliver a desired pressure of water, or other fire fighting liquid, foam, or foam/liquid mixture, when subjected to high temperature conditions or when placed in close flame vicinity. Fiber-reinforced plastic pipes are favored for use as fire fighting piping on off-shore oil platforms and are typically maintained in an empty or uncharged state until a fire is detected. Once a fire is detected, water is routed to the pipes at pressures that can be as high as 225 psig (16 Kgf/cm²), depending on the rated pressure for the pipe. Accordingly, fiber-reinforced pipes that are used in such applications must be able to withstand an elevated temperature and/or close flame contact for a brief period of time when empty, i.e., without the benefit of being charged with water and having the water act as a heat transfer medium to minimize detrimental temperature effects.

Fiber-reinforced plastic pipes used in such fire fighting pipe applications include those made from epoxy resin because of their enhanced corrosion resistance. A rigorous test has been devised to qualify fiber-reinforced pipes for use in such fire fighting pipe applications. The test requires placing the pipe and pipe fitting assembly in close vicinity to a 1,000°C flame with the pipe dry for a period of five minutes, and then filling the pipe with water at a rated pressure for approximately twenty minutes. To pass the test, the pipe and pipe fittings assembly must not show any signs of structural damage and only minor leakage. Fiber-reinforced plastic pipes and pipe fittings formed from epoxy resin have been shown to display significant temperature induced deterioration at temperatures as low as 120°C and, therefore, have proven incapable of passing the test. Fiber-reinforced pipes and pipe fittings formed from polyester resin are equally incapable of passing the test, as these pipes have been demonstrated significant temperature induced deterioration at temperatures as low as 94°C.

In order to pass the test, fiber-reinforced plastic pipes formed from epoxy resin can be coated with an intumescent coating, or formed from an intumescent containing epoxy resin. When exposed to high-temperature conditions or flame contact, the intumescent coating foams, forming a temperature insulating barrier that serves to protect the underlying pipe surface. However, a disadvantage of using an intumescent coating is that it increases the expense of the fiber-reinforced plastic pipe, thereby reducing the cost incentive for using the pipe, and generates toxic smoke when subjected to flame contact.

An alternative for using intumescent coated fiber-reinforced epoxy pipes in fire fighting pipe applications is to construct the pipe from phenolic rather than epoxy resin, which is known to provide enhanced temperature resistance. However, fire fighting pipes and pipe fittings made from fiber-reinforced phenolic resin have also been found to be incapable of passing the test, displaying fiber rupture induced side wall failures when exposed to rated pressures.

Fiber-reinforced plastic pipes formed from epoxy, polyester and phenolic resins are known to display a limited amount of impact resistance and flexibility. Physical properties of impact resistance and flexibility are desired in applications such as fire fighting piping and pipe fittings because it is desired that such piping remain capable of retaining a rated water pressure even when subjected to some amount of movement, possibly created by falling, failing or distorting adjacent structures during a fire.

It is, therefore, desired that fiber-reinforced resin pipe and pipe fittings be constructed that are lightweight, weatherable, corrosion resistant, chemical resistant, and have sufficient burst strength and temperature resistance to pass the above-described test for use in fire fighting pipe applications. It is desired that the fiber-reinforced resin pipe not produce toxic smoke when exposed to flame contact, and provide a desired degree of both impact resistance and flexibility. It is also desired that the fiber-reinforced resin pipe be formed from available materials using conventional manufacturing techniques. PCT patent publication No. WO 94/25791 discloses a fire-resistant, filament-wound structural member made of fibrous carrier and impregnated with a curable resin containing a fire-resistant material. The fire-resistant structural member is made using an underlying structure, e.g. either a mandrel or a filament-wound core, and a resin bath containing a combination of a curable resin and a fire-resistant material and having a predetermined viscosity. The fibrous carrier is drawn through the resin bath, wound around the underlying form and then cured to form the fire-resistant filament-wound structural member.

It is an object of the invention to provide an improved fir resistant pipe.

According to the present invention there is provided a fire resistant pipe comprising: a structural wall comprising layers of helically wound reinforcing fiber bonded with a resin selected from the group consisting of phenolic resins, siloxane-modified phenolic resins, furan resins, and mixtures thereof; and a jacket disposed around the structural wall and having at least one fiber-reinforced resin layer characterised in that the jacket includes at least one release layer of material that is chemically incompatible with the resin used to form the structural wall on whose outer surface and the fiber reinforced resin layer is disposed.

According to the present invention there is further provided, a method for forming a fire resistant pipe comprising the steps of: helically winding reinforcing fiber wetted with a resin selected from the group consisting of phenolic resins, siloxane-modified phenolic resins, furan resins, and mixtures thereof, for forming a structural pipe wall and forming a jacket around an outside surface of the structural pipe wall characterised in that the step of forming a jacket includes the steps of placing a release material around the outside surface of the structural pipe wall and placing a fiber-reinforced resin layer over the release material wherein the release material is formed from a material that is incapable of forming a bond with resins used to form both the structural pipe wall and the fiber-reinforcer resins layer; and curing the resin in both the structural p ipe wall and the fiber-reinforced resin layer.

As will be appreciated hereinafter the fire resistant layer, the energy absorbing material layer, and the jacket are each formed having a sufficient wall thickness to protect the structural wall of the pipe or pipe fitting from heat induced degradation caused by exposing the outermost pipe wall to a 1,000°C flame for at least five minutes when the pipe is in a dry condition, i.e., when the pipe is not charged with water.

Fire resistant pipes and pipe fittings prepared according to principles of this invention are lightweight, weatherable, corrosion resistant, chemical resistant, and have sufficient temperature resistance to be used in fire fighting pipe applications without suffering temperature or flame contact related failure. Fire resistant pipes of this invention, when exposed to flame contact, do not produce toxic smoke and have enhanced impact resistance and flexibility when compared to conventional fiber reinforced plastic pipes formed from epoxy and polyester resin ingredients.

A fire resistant pipe and method of forming such a pipe, both embodying the invention, will now be described, by way of example with accompanying diagrammatic drawings in which:
FIG. 1 is a side elevational view of a fire resistant pipe prior to application of one or more fire resistant layer(s);
FIG. 2 is a side elevational view of the fire resistant pipe of FIG. 1 after application of one or more fire resistant layer(s)
FIG. 3 is a cross sectional view of the fire resistant pipe of FIG. 2 taken across section 3-3;
FIG. 4 is a cross sectional view of a fire resistant pipe comprising an energy absorbing material layer interposed between a structural pipe wall and an outside fiber-reinforced resin layer;
FIG. 5 is a cross sectional view of a fire resistant pipe comprising successive energy absorbing material layers interposed between a structural pipe wall and an outside fiber-reinforced resin layer;
FIG. 6 is a perspective view of a fire resistant pipe according to the principles of the invention comprising a jacket of repeating release layers and a fibre-reinforced resin layer; and
FIGS. 7A to 7C are elevational side views of fire-resistant pipe fittings.

### Detailed Description:

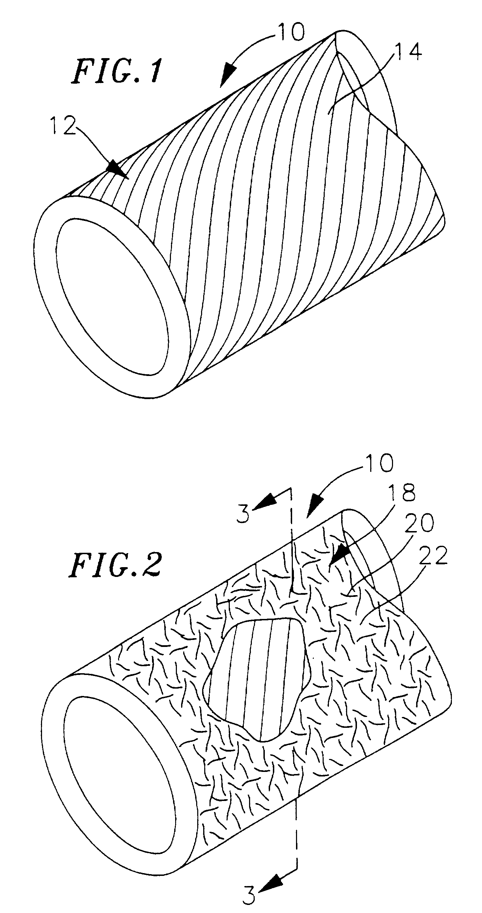

Referring to FIG. 1, a fire resistant pipe 10 constructed according to principles of this invention includes a structural pipe wall 12 formed from multiple layers of helically wound reinforcing fiber 14 bonded together with a resin 16. The structural pipe wall 12 can be formed by using conventional techniques well known in the art for forming fiber-reinforced plastic (FRP) pipe, such as by winding the reinforcing fiber around a mandrel at one or more specific wind angles, and in one or more directions, to obtain a particular degree of hoop and longitudinal strength. In a preferred embodiment, the fiber windings are wound under tension at an angle of approximately 54 degrees around the mandrel in one directions and then in an opposite direction, as this wind angle is known to produce a pipe having an optimum degree of both hoop and longitudinal strength. The number of fiber windings that are used to construct the structural pipe wall depends on the particular size of and application for the pipe. While the above-described technique has been directed toward the construction of pipe, it is to be understood that the same technique can be used to construct pipe fittings such as tees, elbows and the like as well.

The reinforcing fiber component may be selected from conventional filament materials used for forming FRP pipe that do not melt when exposed to fire such as glass, carbon, and the like, and combinations thereof. In a preferred embodiment, the reinforcing fiber is glass. The structural pipe wall is constructed so that a sufficient amount of the resin component is used to wet and bond together the fiber windings. The structural pipe wall may comprise in the range of from about 10 to 40 percent by weight of the resin component. In a preferred embodiment, the structural pipe wall comprises approximately 25 percent by weight resin. The resin is applied to the fiber windings by a conventional application technique, such as by running the windings through a resin bath.

The resin component may be selected from the group of resins consisting of phenolic resins, siloxane-modified phenolic resins, furan resins, and mixtures thereof. Any type of phenolic resin can be used as the resin component and is ultimately selected based on the desired physical properties for the intended end use application. Preferred phenolic resins suitable for use in forming the structural pipe wall include phenolic resole and phenolic novolac resins. Suitable phenolic resins can include those based on phenol, substituted phenols like para-cresol, xylenol, bisphenol A, paraphenylphenol, para-tert-butyl phenol, para-t-octyl phenol and resorcinol. The phenolic resin can be prepared by combining a suitable phenol with an aldehyde, such as formaldehyde, acetaldehyde, paraldehyde, glyoxal, hexamethylene-tetraamine, and furfural.

Preferred phenolic resins are low viscosity phenolic resole resins because of their optimal wetting of the fiber-reinforcing material and their contribution to producing a fiber-reinforced pipe having a high glass content. Preferred phenolic novolacs found most useful in this invention are prepared from any of the phenols and aldehydes previously described and have molecular weights in the range of from about 400 to 5,000 with glass transition temperatures in the range of from about 40°C to 90°C. Phenolic resoles found most useful in this invention have molecular weights in the range of from about 300 to 3,000, solids contents from 50 to 90% by weight, and may contain from 2 to 20% by weight free phenol or substituted phenol and from 1 to 10% by weight water.

Manufacturers of suitable phenolic resins include: B.P. Chemical Division of British Petroleum of Barry U.K.; the Packaging and Industrial Products Division of Borden, Inc., of Columbus, Ohio; the Durez Division of Occidental Petroleum of Dallas, Texas; Georgia-Pacific Corporation of Atlanta, Georgia; Neste Resins Corporation of Eugene, Oregon, as well as a number of other small producers. Some preferred phenolic resins include B.P. Chemical's Cellobond J1996L, J2018L and J2027L, Borden's SL-898 phenolic resole, and Georgia-Pacific's GP5018 phenolic resole.

Particularly preferred siloxane-modified phenolic resins useful in forming the structural pipe wall include those prepared by combining, in a first embodiment, a silicone intermediate, a phenol or substituted phenol, and an aldehyde donor, by combining, in a second embodiment, one of the above-described phenolic novolac resins with a silicone intermediate, or by combining, in a third embodiment one of the above-described phenolic resole resins with a silicone intermediate.

In a first embodiment, a siloxane-modified phenolic resin is prepared by combining phenol or a substituted phenol described above, with an aldehyde described above, and a silicone intermediate. The amount of aldehyde present and the type of catalyst used will determine whether a siloxane-modified phenolic novolac or resole resin is formed.

With respect to the silicone intermediate, alkoxy-functional and silanol-functional silicone intermediates may be used. Silicone intermediates as referred to in this invention are chemical polymer structures that have an -Si-O- backbone and that are capable of undergoing further reaction, e.g., hydrolysis and/or condensation, to form a cured polymer structure. A preferred class of silicone intermediates have the formula 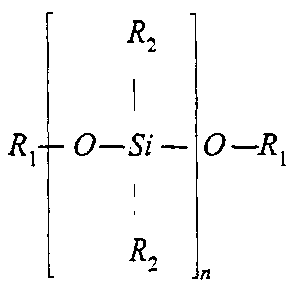 where each R₂ is independently selected from the group consisting of the hydroxy group, alkyl, aryl, aryloxy, and alkoxy groups having up to six carbon atoms, where each R₁ is independently selected from the group consisting of hydrogen, alkyl, and aryl groups having up to 12 carbon atoms, and where n is an integer in the range of from 1 to 56, selected so that the average molecular weight of the silicone intermediate is from about 150 to about 10,000. It is believed that the molecular weight of the silicone intermediate selected may have an impact on the degree to which an interpenetrating network (IPN) of phenolic polymer and siloxane polymer is formed, and the proportion of siloxane groups that copolymerize with the phenolic polymer to form a continuous phase.

Another group of silicone intermediate can be represented by an hydroxyl (OH) containing silicone material, including those materials wherein the OH group or groups are attached directly to the silicon atom such as the silanol materials having the general formulas 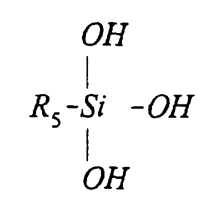 and 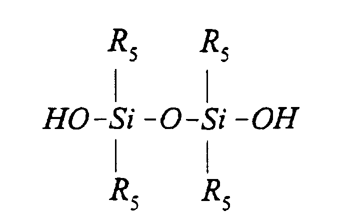 and 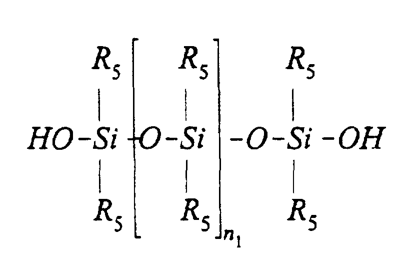 where each R₅ group may comprise a hydrocarbon radical selected from the group including alkyl, alkenyl, cycloalkyl, aryl, alkaryl, or aralkyl radicals, and where n₁ may be an integer in the range of from about one to thirty.

Still another group of OH containing silicone materials are materials that comprise two or more OH groups attached to a silicon atom, and that have two or more silicon atoms attached through divalent organic radicals, such as those having the general formula 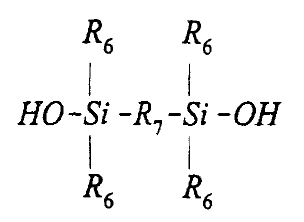 where each R₆ group may comprise another OH group or may comprise a hydrocarbon radical selected from the group including alkyl, cycloalkyl, aryl, alkaryl, and alkylaryl radicals, where R₇ may comprise a divalent organic radical selected from the group including methylene, polymethylene, aralyene, polyaralyne, cycloalkylene, and polycycloalkylene.

Methoxy-functional silicone intermediates useful in this invention include, but are not limited to: DC-3074, DC-3037 from Dow Corning Corporation of Midland, Michigan; SY-231 (molecular weight approximately 1,000) and MSE-100 from Wacker Silicone Corporation; and SR-191 from General Electric. Silanol-functional silicone intermediates generally have in the range of from about 0.5% to 6% by weight Si-OH. Commercially available silanol-functional silicone intermediates useful in this invention include, but are not limited to: Diphenylsilandiol (molecular weight approximately 216), Wacker Silicones SY-409 (molecular weight approximately 10,000) and SY-430; and the following materials from Dow Corning: DC804, DC805, DC806A, DC840, Z-6018, DC-1-2530, DC-6-2230, DC-1-0409, DC-1-0410 and laminating resins 2103, 2104 and 2106.

A preferred first embodiment of a siloxane-modified phenolic resin is prepared by combining phenol, or substituted phenol, an aldehyde such as formaldehyde, and a silicone intermediate. On the basis of a charge weight of one mole of phenol, the weight of formaldehyde will vary between 0.75 and 0.90 moles, and the weight of silicone intermediate will vary between 0.01 and 0.3 moles. The molar ratio of phenol to formaldehyde in a phenolic novolac resin is typically 1:0.75-0.90. Table 1 shows the typical molar ranges of silicone intermediates, having different molecular weights, used to prepare the siloxane-modified phenolic novolac resin.

**TABLE 1**

| **SILICONE INTERMEDIATE** | **MOLECULAR WEIGHT** | **1 MOLE PHENOL AND 0.75 MOLE FORMALDEHYDE** | **1 MOLE PHENOL AND 0.90 MOLE FORMALDEHYDE** |
|---|---|---|---|
| Diphenylsilandiol | 216 | 0.01-0.3 mole silicone intermediate | 0.01-0.3 mole silicone intermediate |
| SY-231 | 1,000 | 0.01-0.2 mole silicone intermediate | 0.01-0.2 mole silicone intermediate |
| SY-409 | 10,000 | 0.01-0.05 mole silicone intermediate | 0.01-0.05 mole silicone intermediate |

A first preferred embodiment of a siloxane-modified phenolic resole resin is prepared by combining phenol, or substituted phenol, an aldehyde such as formaldehyde, and a silicone intermediate. On the basis of a charge weight of one mole of phenol, the weight of formaldehyde will vary between 1.2 and 3 moles, and the weight of silicone intermediate will vary between 0.01 and 0.7 moles. The molar ratio of phenol to formaldehyde in a phenolic resole resin is typically 1:1.2-3. Table 2 shows the typical ranges of silicone intermediates having different molecular weights used to prepare the siloxane-modified phenolic resole resin.

**TABLE 2**

| **SILICONE INTERMEDIATE** | **MOLECULAR WEIGHT** | **1 MOLE PHENOL 1.2 MOLE FORMALDEHYDE** | **1 MOLE PHENOL 3 MOLE FORMALDEHYDE** |
|---|---|---|---|
| Diphenylsilandiol | 216 | 0.01-0.7 mole silicone intermediate | 0.01-0.3 mole silicone intermediate |
| SY-231 | 1,000 | 0.01-0.02 mole silicone intermediate | 0.01-0.02 mole silicone intermediate |
| SY-409 | 10,000 | 0.01-0.05 mole silicone intermediate | 0.01-0.05 mole silicone intermediate |

For each of the above-described first embodiments of the siloxane-modified phenolic novolac and resole resins, it is desired that in the range of from about 0.5 to 35 percent by weight of the silicone intermediate be used.

In preparing first embodiments of the siloxane-modified phenolic resins, catalysts are used to form either a desired phenolic novolac or phenolic resole resin prepolymer. For example, when forming the siloxane-modified phenolic resin, a strong acid such as sulfuric acid, sulfonic acid, oxalic acid, or phosphoric acid is used to facilitate formation of the phenolic novolac resin prepolymer. When forming the siloxane-modified phenolic resin, a strong base such as sodium hydroxide, calcium hydroxide or barium hydroxide is used to facilitate formation of the phenolic resole prepolymer. In preferred first embodiments, a siloxane-modified phenolic novolac resin may be prepared by using up to about five percent by weight acid catalyst, and a siloxane-modified phenolic resole resin may be prepared by using up about five percent by weight base catalyst.

Catalysts other than, and in addition to, those described above can optionally be used in preparing first embodiments of the siloxane-modified phenolic resin to facilitate condensation of the phenolic resin and silicone intermediate by reducing the time and/or temperature associated with such reactions. Catalysts useful for facilitating condensation of the phenolic resin and silicone intermediate are the same, and can be used in the same proportion, as those described below that can optionally be used for preparing second and third embodiments of the siloxane-modified phenolic resin.

First embodiments of the siloxane-modified phenolic novolac and resole resins are prepared by first combining the phenol and silicone intermediate ingredients and then adding the aldehyde ingredient to form a mixture of phenolic polymers, siloxane polymers, and phenolic-siloxane polymers. Elevating the temperature of the combined mixture is desirable to reduce reaction times associated with forming the siloxane-modified phenolic resin.

For example, a first embodiment of the siloxane-modified phenolic novolac resin can be prepared by a batch process using a jacketed stainless-steel reaction vessel equipped with a turbine blade or anchor-type agitator, a vapor condenser, and a temperature controller. Typically, molten phenol is charged to the reaction vessel, the agitator is started and silicone intermediate is added. An acid catalyst can be added at this point to facilitate formation of the phenolic novolac polymer. Formalin (37-40 percent aqueous formaldehyde) is then charged to the reaction vessel, either before raising the temperature, or by controlled addition at elevated temperature. A vigorous condensation reaction ensues which is highly exothermic. The condensation step is continued until the desired molecular weight distribution has been achieved, During this time the mixture may become two phases with separation of the resinous component. The actual reaction time will vary depending on the desired molecular weight distribution, the use of one or more catalysts, pH, and aldehyde to phenol to silicone intermediate mole ratios.

The ingredients are mixed together, during which time the phenol, aldehyde and silicone intermediate undergo polycondensation, which polycondensation can optionally be accelerated by action of a catalyst, as described below. During this time, alkoxy-functional silicone intermediates also undergo hydrolysis to form silanol-functional silicone intermediates, which polymerize to form a siloxane polymer and also copolymerize with the newly-formed phenolic novolac resin prepolymer to form a siloxane-modified phenolic resin. Accordingly, the resulting resin comprises an IPN of phenolic novolac polymer and siloxane polymer, and a continuous phase formed from the phenolic polymer having one or more siloxane groups in its backbone. Hydrolysis of the alkoxy-functional silicone intermediates can optionally be accelerated by action of a catalyst, as described below. Alternatively, silanol-functional silicone intermediates can be used in the process which can copolymerize directly with newly-formed phenolic novolac resin prepolymer.

At the end of the condensation period, water, residual moisture, unreacted phenol and low molecular weight species may be removed by atmospheric, vacuum or steam distillation. The point at which distillation is stopped is usually determined by taking a sample of the resin and measuring its melt viscosity. After the resin has cooled, it can be treated in several ways. It can be sold in lump or flake form, compounded to form molding powders, or it can be ground and blended with hexamine and other fillers.

As another example, a first embodiment of the siloxane-modified phenolic resole resin can be prepared by a batch process using the same equipment previously described for preparing a first embodiment of the siloxane-modified phenolic novolac resin. Typically, molten phenol is charged to the reaction vessel, the agitator is started and silicone intermediate is added. Alkaline catalysts may be added at this time to facilitate formation of the phenolic resole polymer. Formalin is added and the batch is heated. The initial reaction is exothermic. Condensation is usually carried out at atmospheric pressure and at temperatures in the range of from 60 to 100°C or at reflux. Because siloxane-modified phenolic resole siloxane resins are themselves thermosetting, dehydration is carried out quickly and at low temperatures so as to prevent over-reaction or gelation. The end point is found by manual determination of a specific hot-plate gel time, which decreases as resinification advances. Siloxane-modified phenolic resole resins can be refrigerated to prolong their storage stability.

Second and third embodiments of a siloxane-modified phenolic novolac resin and a siloxane-modified phenolic resole resin, respectively, are prepared by using a phenolic novolac resin and phenolic resole resin, respectively, as starting materials. Suitable phenolic resole and phenolic novolac resins include those previously described above. The second embodiment of the siloxane-modified phenolic novolac resin is prepared by combining in the range of from 75 to 95 percent by weight of the phenolic novolac resin. The third embodiment of the siloxane-modified phenolic resole resin is prepared by combining in the range of from 65 to 99.5 percent by weight of the phenolic resole resin.

With respect to the silicone intermediate, those silicone intermediates previously described for preparing the first embodiments of the siloxane-modified phenolic resin are also used to prepare the second and third embodiments of the siloxane-modified phenolic resins. Second and third embodiments of the siloxane-modified phenolic resins may each comprise in the range of from 0.5 to 35 percent by weight of the alkoxy-functional or silanol-functional silicone intermediate.

In the second embodiment, the siloxane-modified phenolic novolac resin is prepared by combining a phenolic novolac resin with a formaldehyde donor and a silicone intermediate. Suitable formaldehyde donors include aqueous formaldehyde solutions, paraform, trioxane, hexamethylenetetraamine and the like, a preferred material is hexamethylenetetraamine. The second embodiment of the siloxane-modified phenolic novolac resin may comprise in the range of from about 3 to 15 percent by weight of the formaldehyde donor.

The third embodiment of a siloxane-modified phenolic resole resin is prepared by combining a phenolic resole resin with a silicone intermediate. If desired, either an acid or base catalyst can optionally be used to reduce reaction time associated with finally curing the resin. Suitable inorganic acid catalysts that can optionally be used in the third embodiment include phosphoric, hydrochloric, and sulfuric acids. Suitable organic acids that can optionally be used in the third embodiment include paratoluene sulfonic and phenyl sulfonic acids. Latent acid catalysts can also be used in to improve pot life and to increase the application window without gel formation. Suitable base catalysts for curing phenolic resoles include various forms of barium and magnesium oxide, and the like. Commercially available proprietary latent acid type catalysts useful in this invention are available from British Petroleum Chemicals under the trade name Phencat 381 and Phencat 382. Other proprietary catalysts include Borden RC-901, a diphenyl phosphoric acid ester supplied from Dover Corp., having the product name Doverphos 231L, and Georgia-Pacific's GP3839 and GP308D50. The third embodiment of the siloxane-modified phenolic resole resin may comprise up to about 15 percent by weight of the optional acid or base catalyst or curing agent.

If desired, the first, second and third embodiments of the siloxane-modified phenolic resins may each optionally comprise a sufficient amount of catalyst to reduce the reaction time and reduce the reaction temperatures associated with condensing the silicone intermediate and copolymerizing it with the phenolic polymer during formation of the siloxane-modified phenolic resin.

Suitable catalysts are selected from the group consisting of organometallic compounds, amine compounds, and mixtures thereof. Combinations of an organometallic compound with an amine compound are preferred, when desired, for catalyzing hydrolysis and/or condensation of the silicone intermediate. Useful organometallic compounds include metal driers well known in the paint industry such as zinc, manganese, cobalt, iron, lead and tin octoate, neodecanates and naphthenates, and the like. Organotitanates such as butyl titanate and the like are also useful in the current invention.

A preferred class of organometallic compounds useful as a catalyst is organotin compounds which have the general formula 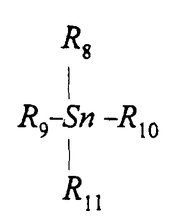 where R₈, R₉, R₁₀ and R₁₁ are selected from the group consisting of alkyl, aryl, aryloxy, and alkoxy groups having up to 11 carbon atoms, and where any two of R₈, R₉, R₁₀ and R₁₁ are additionally selected from a group consisting of inorganic atoms consisting of halogen, sulfur and oxygen.

Organotin compounds useful as catalysts include tetramethyltin, tetrabutyltin, tetraoctyltin, tributyltin chloride, tributyltin methacrylate, dibutyltin dichloride, dibutyltin oxide, dibutyltin sulfide, dibutyltin acetate, dibutyltin dilaurate, dibutyltin maleate polymer, dibutyltin dilaurylmercaptide, tin octoate, dibutyltin bis (isooctylthioglycolate), butyltin trichloride, butylstannoic acid, dioctyltin dichloride, dioctyltin oxide, dioctyltin dilaurate, dioctyltin oxide, dioctyltin dilaurate, dioctyltin maleate polymer, dioctyltin bis (isooctylthioglycolate), dioctyltin sulfide, and dibutyltin 3-mercapto propionate. The first, second and third embodiments of the siloxane-modified phenolic resin may comprise up to about five percent by weight of the organometallic catalyst.

With respect to the amine compound, preferred amine compounds for optionally catalyzing the hydrolysis and/or condensation reactions of the silicone intermediate have the general formula 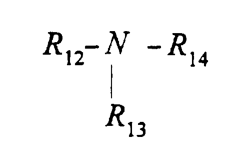 where R₁₂ and R₁₃ are each selected from the group consisting of hydrogen, aryl, and alkyl groups having up to 12 carbon atoms, and where R₁₄ is selected from the group consisting of alkyl, aryl, and hydroxyalkyl groups having up to 12 carbon atoms.

Suitable amine compounds useful as catalysts include dimethyl methanolamine, ethylamino ethanol, dimethyl ethanolamine, dimethyl propanolamine, dimethyl butanolamine, dimethyl pentanolamine, dimethyl hexanolamine, methylethyl methanolamine, methylpropyl methanolamine, methylethyl ethanolamine, methylethyl propanolamine, monoisopropanolamine, methyldiethanolamine, triethanolamine, diethanolamine, and ethanolamine. Preferred amine compounds include dimethyl ethanolamine and ethyl aminoethanol. The first, second and third embodiments of the siloxane-modified phenolic resin may comprise up to about five percent by weight of the amine catalyst.

If desired, the organometallic compound and amine compound can each be used independently to form a siloxane-modified phenolic resin. However, it has been discovered that when combined, the organometallic compound and amine compound act synergistically to catalyze the curing process, thereby reducing the curing time further and/or reaction temperatures greater than that observed by using either the organometallic or amine catalyst alone. Accordingly, if desired under the circumstances, it is preferred that an organometallic compound be used in combination with an amine compound to catalyze both the formation of hydroxide by hydrolysis of the silicone intermediate, in the event that an alkoxy-functional silicone intermediate is used, and polymerization by condensation of both the alkoxy and silanol-functional silicone intermediate. An exemplary organometallic and amine compound combination is dibutyltin diacetate and ethyl aminoethanol. Dibutyltin diacetate, when combined with the amine, reacts synergistically to catalyze the curing process. Although it is believed that the synergistic effect of the organotin compound and the amine compound is mechanistic in character, the exact mechanism is not known.

A preferred ratio of organometallic compound to amine compound, when used together as the catalyst, is approximately one to one. Therefore, the first, second and third siloxane-modified phenolic resins may comprise up to about 10 percent by weight combined organometallic and amine catalyst. Accordingly, siloxane-modified phenolic resins prepared by combining an organometallic and amine catalyst, and an optional acid or base catalyst may comprise up to about 25 percent by weight catalyst. Preferred first, second and third siloxane-modified phenolic resins comprise in the range of from 5 to 25 percent by weight of the combined catalysts.

Water may be present in the form of an aqueous phenolic resole or in the form of an aqueous formaldehyde. For example, the phenolic resole may comprise in the range of from 3 to 12 percent by weight water, and the formaldehyde may comprise formalin, which is approximately 37-40 percent aqueous formaldehyde. The first, second and third embodiments of the siloxane-modified phenolic resin can result in the formation of phenolic resins having very low or zero water content, which provides improved fire stability and processing characteristics. The silicone intermediate functions as a reactive diluent to give a stable product with generally low viscosity.

Second and third embodiments of the siloxane-modified phenolic resin are prepared by combining in the above-described proportions a phenolic novolac or resole resin with a methoxy or silanol-functional silicone intermediate. A formaldehyde donor is added in the second embodiment. If desired, the catalyst for the phenolic resin, and the catalyst for the silicone intermediate, i.e., the organometallic compound and/or the amine compound, can optionally be added to reduce reaction and cure time and reduce reaction temperature.

Fire resistant pipes having the structural pipe wall and fire resistant layer formed from siloxane-modified phenolic resins display improved physical properties of hoop strength, chemical resistance, flexibility, impact resistance, and flexural modulus when compared to pipes otherwise formed from non-modified phenolic resins, without affecting the physical properties of heat, flame and chemical resistance inherent in the phenolic resin. Additionally, fire resistant pipes formed from such siloxane-modified phenolic resins have reduced microvoid formation and, therefore, densities closer to theoretical density when compared to conventional non-modified phenolic resins. Less microvoid formation also prevents possible water entrapment that would adversely affect the resin's temperature resistant properties due to steam generation and related resin matrix failure.

Furan resins can be selected for use in forming the structural pipe wall because of their enhanced temperature resistance when compared with conventional epoxy and polyester FRP resins. Furan resins, however, display a lower degree of temperature resistance and are more expensive than either the phenolic or siloxane-modified phenolic resins.

The structural pipe wall of the fire resistant pipe is constructed having one or more layers of fiber windings. For example, for an approximately two inch inside diameter pipe, rated at 225 psig for fire fighting pipe service, it is desired that the structural wall comprise in the range of from 2 to 20 layers of fiber winding, and optimally 6 to 16 layers of fiber winding. A structural pipe wall having less than about 2 layers of fiber winding will have a degree of hoop and longitudinal strength, and temperature resistance less than that desired for use in a fire fighting pipe application. A structural pipe wall constructed having more than about 20 layers of fiber winding is more than that necessary to provide a sufficient degree of hoop and longitudinal strength, and temperature resistance for use in a fire fighting pipe application and, therefore adds unnecessary weight and expense to the pipe.

Referring now to FIG. 2, a fire resistant layer 18 is disposed around the outside surface of the structural pipe wall 12. The fire resistant layer 18 is generally a resin rich heat-ablative shield that is used to surround the structural pipe wall 12 and protect it from exposure to high temperature or direct flame contact. The fire resistant layer 18 comprises a carrier component 20 that is impregnated with a resin component 22. Typically, fire resistant layer 18 is wound circumferentially around the outside surface of the structural pipe wall 12 until a desired number of layers, i.e., heat shield wall thickness, is obtained. The fire resistant layer can, however, be applied by a spray application technique.

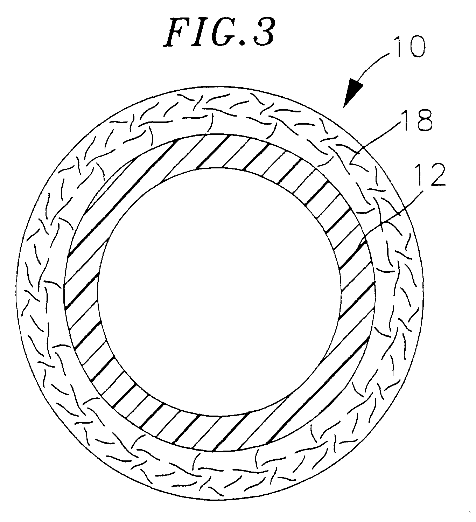

FIG. 3 illustrates of a fire resistant pipe 10 comprising a structural wall 12 formed from multiple fiber windings 14, and multiple fire resistant layers 18. The number of fire resistant layers that are used to form the fire resistant pipe or pipe fitting varies, depending such factors as the size of the pipe, the potential temperature or flame exposure by the pipe, the type of fiber and/or resin component selected to form the structural pipe wall, the type of carrier and/or resin component selected to form the fire resistant layer, and the like. Preferred embodiments of that fire resistant pipe may include in the range of from 1 to 15 fire resistant layers, depending on the above-mentioned factors. In one example, for an approximately two inch inside diameter pipe, the fire resistant pipe comprises in the range of from 2 to 15 fire resistant layers.

The fire resistant layer 18 can be wound around the structural pipe wall 12 by conventional winding techniques, such as those described above for constructing the structural pipe wall. It is desired that the fire resistant layer be wound at a sufficient tension to provide a good interface between the adjoining pipe wall and fire resistant layer surfaces. The fire resistant layer 18 can be applied shortly after forming the structural pipe wall, and before the resin component of the pipe wall has cured, to provide good interlayer bonding during cure between the interfacing resin components of the pipe wall and fire resistant layer. Accordingly, as described below, it is desired that the resin component of the fire resistant layer is compatible with the resin used to form the structural pipe wall.

The carrier component 20 used to form the fire resistant layer 18 can be formed from any type of material capable of both accommodating a large amount of the resin component and providing a support structure for the resin in both a wet and cured state. Additionally, it is desired that the carrier be capable of supporting the resin and not crumbling or flaking away from the structural pipe wall when subjected to high temperature or direct flame. It is desired that the carrier be capable of accommodating in the range of from 75 to 95 percent by weight of the resin component, or roughly three times the resin content of the fiber-reinforced windings. The fire resistant layer can comprise approximately 90 percent by weight resin.

Suitable carrier materials include fibrous mat-like structures comprising glass fiber, carbon fiber, mixtures of polyester fiber or nylon fibers with other high-temperature fibers, similar fiber felts, chopped fibers, and the like, and combinations thereof. A preferred glass fiber containing carrier material is one manufactured by Owens Corning of Toledo, Ohio under the product name C-Veil, product code number GC 70E, which is a thin mat of randomly oriented chopped C-glass fibers that are bound together by a binder dispersion. A preferred polyester fiber containing material is one manufactured by Precision Fabrics Group of Greensboro, North Carolina under the product name Nexus, product code number 111-00005, which is formed from stretched and heat set 100 Dacron® polyester, and that does not contain any glass fibers.

Although the carrier component has been described and illustrated as being a mat-like structure applied by conventional winding technique, it is to be understood that the carrier can alternatively be in the form of a spray applicable material containing chopped fibers and resin. Suitable spray applicable carriers include those capable of being loaded with the above-described amount of the resin component for spray application onto the surface of the structural pipe wall using conventional spray application techniques.

The carrier component provides a fibrous reinforcement in the resin matrix of the fire resistant layer. The fibers provide mechanical strength for the resin which may be somewhat brittle. Thermal decomposition of the resin makes it brittle even when relatively impact resistant before exposure. The effect is that the fire resistant layer at most ablates in fine particles instead of spalling in large flakes that would rapidly deplete the resin rich protective layer and expose the underlying structural wall of the pipe to thermal degradation. Surprisingly, some thermoplastic resin fibers may be used even though they would seem to be subject to significant degradation in a flame test. Such fibers work best, however, when mixed with high-temperature fibers. Glass fibers are, however, preferred for strength and temperature resistance.

The resin component 22 used to impregnate the carrier component to form the fire resistant layer 18 is selected from the same group of phenolic resins, siloxane-modified phenolic resins, furan resins, and mixtures thereof described above for the resin used to form the structural pipe wall. The resin component is applied to the carrier, when embodied as a mat-like structure, by the same technique described above for applying resin to the fiber-reinforced windings. It is preferred that the resin component selected for the fire resistant layer be the same as that selected to form the underlying structural pipe wall to ensure chemical compatibility and, thereby provide a good chemical bond between interfacing structural pipe wall and fire resistant layer surfaces during cure. Furthermore, by using the same resin, a single cure cycle is used for the entire pipe.

The fire resistant pipe may be constructed having one or more layer(s) of the same type of fire resistant material, or may be constructed having one or more layers of different types of the fire resistant material. It is desired that the resin component of each different type of fire resistant material be compatible with the resin component of the adjacent structural pipe wall or fire resistant layer surface to promote good interlayer bonding. For example, the fire resistant pipe or pipe fitting may include, moving outwardly from the surface of the pipe wall, one or more layer(s) of the C-Veil-type material, one or more layer(s) of the Nexus type material, and one or more layer(s) of the C-Veil type material, each impregnated with the same resin component as that used to form the structural pipe wall. The use of different types of fire resistant layers may be desired to reduce raw material costs, optimize temperature resistance, minimize weight, or the like. The fire resistant layer can be formed from alternating layers of C-glass fiber (C-Veil) and polyester material (Nexus) impregnated with a siloxane-modified phenolic resin composition.

After the structural pipe wall has been formed, and the fiber resistant layer has been applied, the resin components of the fire resistant pipe are cured simultaneously by exposing the pipe to a temperature in the range of from about 140 to 190°F (60 to 88°C) for a period of about 30 minutes. It is desired that the resins used to form the structural pipe wall and the fire resistant pipe comprise sufficient catalyst to effect cure at a temperature below about 212°F (100°C). It is to be understood that the cure conditions for the pipe may vary depending on the amount and/or type of catalyst used, the type of resin selected, the number of fiber-reinforced windings, the number of fire resistant layers, and the like.

The cured fire resistant layer acts as a heat ablative coating that forms a porous outer layer when exposed to conditions of high-temperature or direct flame. The porous outer layer does ablate away from the pipe but, remains intact to form a heat insulating layer that protects the underlying structural pipe wall from potentially damaging effects of such high-temperature or direct flame conditions.

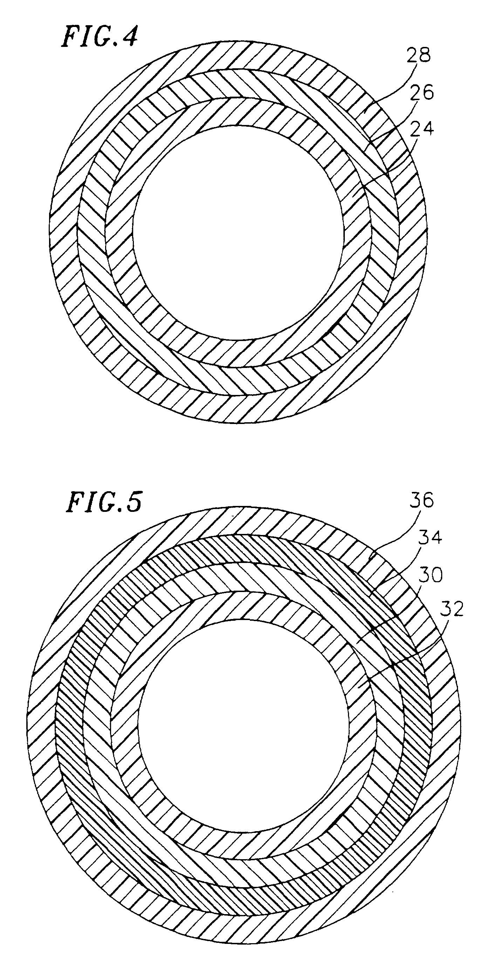

Referring now to FIG. 4, a fire resistant pipe includes a structural wall 24, constructed as described above , and one or more layers of an energy absorbing material 26 disposed onto the surface of the structural pipe wall. The energy absorbing material used to form the layer is preferably one capable of absorbing a large degree of heat from an outside surrounding layer and using such energy, e.g., via an endothermic reaction, to effect a phase change, e.g., from solid to gas, below the degradation temperature of the structural wall. The gas formed from the layers produce a thermally insulating air gap between the outside surrounding layer and the structural pipe wall.

Suitable energy absorbing materials include polymeric materials, solid hydrate or hydrite materials and the like that are capable of undergoing an endothermic phase transformation to vaporize, or liberate a gas, at a temperature below the degradation temperature of the resin selected to form the underlying structural wall, i.e., below about 300°C. Examples of preferred energy absorbing materials include polyethylene, hydrated calcium sulfate (gypsum), aluminum trihydroxide, and other hydrated or hydroxide containing compounds capable of vaporizing or producing a gas constituent below about 300°C. Polymeric materials, such as polyethylene and the like, filled with a powder component are also desired, as the combination of gas and powder produced during vaporization produces a gas and powder layer between the outside surrounding layer and the structural pipe wall having enhanced thermal insulating properties.

When polyethylene is used as the energy absorbing material to form a second fire resistant pipe embodiment, it can be wound in sheet form around the structural pipe wall 24 a number of times to form a desired number of layers or layer thickness. When polyethylene in the form of 0.15 millimeter thick sheet is used, it is desired that in the range of from 4 to 20 layers be used, thereby providing a total energy absorbing material wall thickness in the range of from about 0.6 to 3 millimeters. The polyethylene sheet is applied by the same winding technique described above for the structural pipe wall and fire resistant layer of the fire resistant pipe. It is not necessary that the polyethylene layer be applied at a specific wind angle, since it is intended to be sacrificial and not contribute to the hoop or longitudinal strength of the pipe. Where the energy absorbing material is other than polyethylene, it can be applied in sheet form, in spray form, or in the form of solid half sheets configured to fit over part of the structural pipe wall.

Layers of fiber-reinforced resin 28 are wound around an outside surface of the energy absorbing material layer 26. The fiber-reinforced resin can be the same as that selected to form the structural pipe wall 24, or can be different. The fiber-reinforced resin can be the same, and is applied in the same manner, as that selected to form the structural pipe wall. The number of layers of the fiber-reinforced resin that is applied depends on the particular pipe application and the degree of heat or flame resistance desired. The fire resistant pipe may include in the range of from 2 to 20 layers of the fiber-reinforced resin 28.

Alternatively, a fire resistant pipe may comprise a number of repeating fiber-reinforced resin layers and energy absorbing material layers. For example, a fire resistant pipe can include first energy absorbing material layers disposed onto the structural pipe wall, first fiber-reinforced resin layers disposed onto an outside surface of the first energy absorbing material layers, second energy absorbing layers disposed onto a surface of the first fiber-reinforced resin layers, and second fiber-reinforced resin layers disposed onto an outside surface of the second energy absorbing material layers. In such a case, the energy absorbing materials selected to form the first and second energy absorbing material layers can be the same or can be different, and can be selected so that an energy absorbing material having a relatively higher vaporization temperature below the degradation temperature of the fiber-reinforced resin layers is used to form the outermost energy absorbing material layer. In such a case, the number of each energy absorbing material layers can be the same as or less than that disclosed above for a pipe having a single energy absorbing material layer.

Referring to FIG. 5, a fire resistant pipe can include two different types of energy absorbing material layers positioned adjacent one another to provide a desired degree of energy absorption and thermal insulation. For example, a number of first energy absorbing material layers 30, of a first type of energy absorbing material, are disposed onto a surface of the structural pipe wall 32. A number of second energy absorbing material layers 34, of a second type of energy absorbing material, are disposed onto a surface of the first energy absorbing material layers. Preferably, the second type of energy absorbing material has a relatively higher vaporization temperature than the first type of energy absorbing material so that the two layers act as a sequential thermal insulator to prevent harmful heat energy from reaching the structural pipe wall.

A number of fiber-reinforced resin layers 36 are wound around an outside surface of the second energy absorbing material layer. The number of fiber-reinforced resin layers 36 that are used can be the same as or less than that used to form the structural pipe wall. Additionally, the type of fiber reinforcing material and resin used to form the fiber-reinforced resin layer 36 can be the same as or different than that used to form the structural pipe wall. The number of energy absorbing material layers used to form the first and second energy absorbing material layer can be the same as or different than that used to form the single energy absorbing material layer disclosed above.

If desired, the fire resistant pipe can be formed having more than one set of energy absorbing material layers to provide a desired degree of heat and/or flame protection to the structural pipe wall. For example, the fire resistant pipe can be formed having a structural pipe wall, a first set of different energy absorbing material layers, a first fiber-reinforced resin layer, a second set of different energy absorbing material layers, and a second fiber-reinforced resin layer. In such a case the types of energy absorbing materials that are used to form the first set of energy absorbing material layers can be the same as or different than that used to form the second set of energy absorbing material layers.

Alternatively, the fire resistant pipe can be constructed having one or more layers of an energy absorbing material described above interposed between the structural pipe wall and the fire resistant layers to provide an enhanced degree of heat or flame protection to the structural pipe wall. In such a case, the resin component used to form the heat shield can be different than the resin component used to form the structural pipe wall.

Additionally, if desired, the fire resistant pipe can be constructed having one or more energy absorbing layers interposed between different types of fire resistant layers. Accordingly, one or more energy absorbing material layers can be placed between the structural pipe wall and fire resistant layers and/or between different types of fire resistant layers as desired, depending on the particular application, to provide an optimum degree of heat and flame protection to the structural pipe wall.

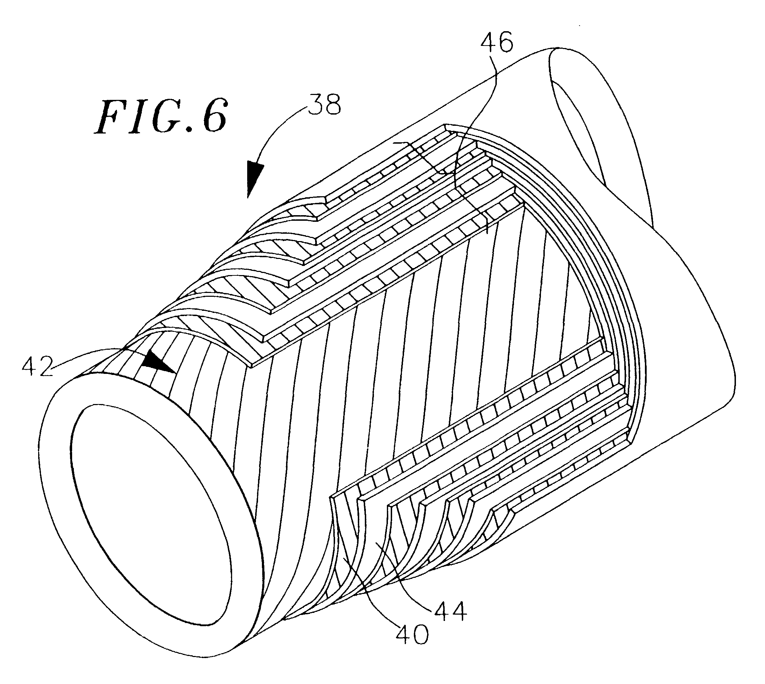

Referring now to FIG. 6, a fire resistant pipe 38 constructed according to principles of this invention includes a release layer 40 disposed onto an outside surface of the structural pipe wall 42, and a fiber-reinforced resin layer 44 disposed onto a surface of the release layer 40. The structural pipe wall is formed in the same manner previously described. The fire resistant pipe comprises a jacket 46 of alternating release layers 40 and fiber-reinforced resin layers 44 disposed around the outside surface of the structural pipe wall 42.

Materials useful for forming the release layer 40 are preferably those that neither bond with the resin used to form the adjacent structural pipe wall or with the resin used to form the fiber-reinforced resin layer. It is desired that the release layer not form a bond with an adjacent structural pipe wall or fiber-reinforced resin wall to permit the release layer to act as a disbondment layer between the resin-containing layers. The disbonding action of the release layer serves to improve the impact of the fire resistant pipe by attenuating the travel of any shock waves through the pipe caused by contact made to the outside surface. Functioning in this manner, the release layers act to deaden or prevent potentially damaging impact shock waves from traveling completely through the pipe to the structural wall, thereby preventing possible fracture or rupture.

Suitable materials for forming the release layers include films formed from polymeric materials that are chemically incompatible with the particular resin used to form the structural pipe wall and fiber-reinforced resin layers. Examples of such polymeric materials include polyolefins such as polypropylene, polyethylene and the like. A particularly preferred release layer is formed from polypropylene.

It is also desired that the material selected to form the release layer be capable of absorbing heat energy applied from the pipe surface, and preferably be a material capable of absorbing a large degree of heat from an outside surrounding layer and using such energy, e.g., via an endothermic reaction, to effect a phase change, e.g., from solid to gas, below the degradation temperature of the structural wall. The gas formed from the release layer(s) acts to form a thermally insulating air gap between the adjacent fiber-reinforced resin layer, and between the fiber reinforcing layers and the structural pipe wall. The air gap allows each of the independent fiber-reinforced resin layers to act as a radiation shield to increase the thermal resistance of the pipe by requiring that radiant heat be progressively transferred through each fiber-reinforced resin layer before reaching the structural pipe wall. The multiradiation shield function of the air gaps avoids the potentially high wall stresses in the pipe caused by the steep thermal gradient on the outside of the pipe during a fire.

The materials noted above for forming the release layers are also heat absorbing and, therefore, useful in forming a release layer that is both disbonding and energy absorbing. Other suitable release layer materials include solid hydrate or hydrite materials and the like, as discussed above for forming the layers of energy absorbing materials, that are capable of undergoing an endothermic phase transformation to vaporize, or liberate a gas, at a temperature below the degradation temperature of the resin selected to form the underlying structural wall, i.e., below about 300°C. Examples of preferred energy absorbing materials include polypropylene, polyethylene, hydrated calcium sulfate (gypsum), aluminum trihydroxide, and other hydrated or hydroxide containing compounds capable of vaporizing or producing a gas constituent below about 300°C.

Polymeric materials, such as polypropylene, polyethylene and the like, filled with a powder component are also desired, as the combination of gas and powder produced during vaporization produces a gas and powder layer between the outside surrounding layer and the structural pipe wall having enhanced thermal insulating properties.

The number of alternating release and fiber-reinforced resin layers used to form the jacket that surrounds the structural pipe wall depends on the particular fire pipe application and the degree of heat or flame resistance desired. In an exemplary embodiment, for a pipe having a structural pipe wall diameter of approximately two inches (51 millimeters), a minimum jacket thickness is approximately 1/8 inches (3 millimeters) comprising four each alternating release and fiber-reinforced resin layers, as shown in FIG. 6. In forming pipe fittings, such as elbows, Y-connections, T-connections and the like, a minimum jacket thickness of approximately 1/8 inches (3 millimeters) is desired. It is to be understood that the exact number of release and fiber-reinforced resin layers that are used to make up a jacket of any designated thickness depends on the thickness of both the release layer material and the fiber-reinforcing material.

When the release layer of the jacket is polypropylene tape, it is applied to the structural pipe wall by the same winding technique described above for the structural pipe wall. Where the release layer is other than polypropylene or other material in tape form, it can be applied in sheet form, in spray form, or in the form of solid half sheets configured to fit over part of the structural pipe wall.

Each fiber-reinforced resin layer is wound around an outside surface of a respective release layer. The material use to form the fiber-reinforced resin layers can be the same as that selected to form the structural pipe wall, or can be different. In a preferred embodiment, the fiber-reinforced resin layers are formed from the same materials as the structural pipe wall and is applied in the same manner as that selected to form the structural pipe wall. Like the release layers, the number of fiber-reinforced resin layers that are applied depends on the particular fire pipe application and the degree of heat or flame resistance desired.

The jacket surrounding the structural pipe wall may comprise repeating release layers that are each formed from the same or different materials. For example, a fire resistant pipe may have a jacket comprising release layers the are formed from progressively more energy absorbing materials moving from the structural pipe wall to the outermost fiber-reinforced resin layer, to thereby provide a graduated degree of heat protection with the highest protection located where it is needed most, i.e., nearest the outermost surface of the pipe. In such an embodiment, it is desired that the material selected to form an outermost release layer have a relatively higher vaporization temperature than the remaining release layers that would be below the degradation temperature of the adjacent fiber-reinforced resin layers.

Additionally, the jacket surrounding the structural pipe wall may comprise an outermost fiber-reinforced resin layer having, as a filament component, at least one carbon fiber winding for purposes of holding the jacket together during pipe exposure to fire temperatures that exceed the melting temperature of glass filament.

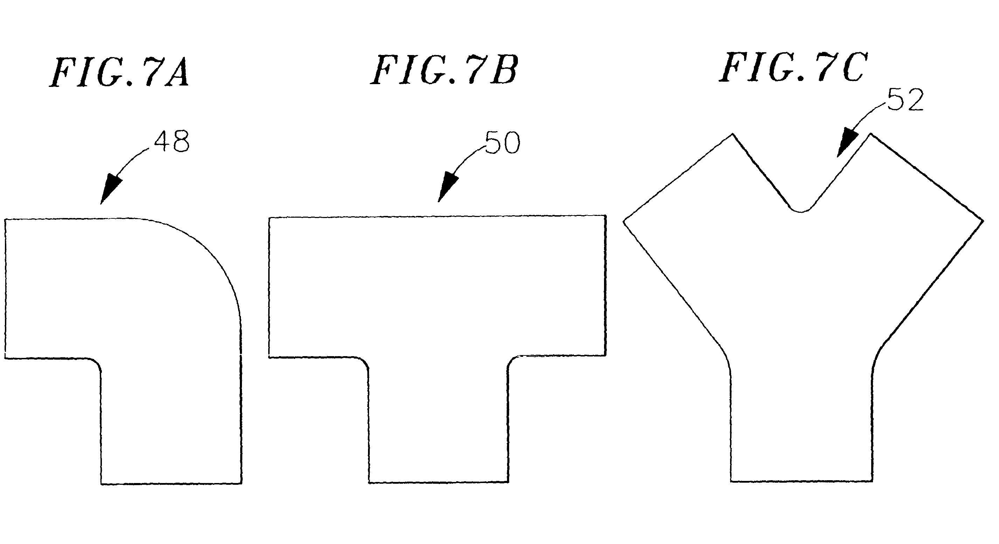

Although the construction of fire resistant pipes has been specifically described and illustrated above, it is to be understood that fire resistant pipe fittings can also be constructed. Referring to FIGS. 7A to 7C, fire resistant pipe fittings, such as elbows 48, tees 50, Y-shaped fittings 52, and the like can also be prepared.

Fire resistant pipes of this invention and pipe fittings can be used alone or combined to form a pipe assembly well suited for use in fire fighting pipe applications, such as fire fighting pipe assemblies that are used on offshore platforms and the like. Pipes and pipe fittings used in such applications must be able to function under conditions of high temperature and close flame vicinity without suffering significant reductions in hoop strength and longitudinal strength.

Fire resistant pipes constructed according to principles of this invention and pipe fittings were subjected to a rigorous high-temperature to qualify for use in fire fighting piping applications. The test involved placing the pipe and/or pipe fittings approximately four inches from a 1,000°C flame with the pipe dry, i.e., with no water contained therein, for a period of approximately five minutes. After five minutes, the pipe and/or pipe fittings were filled with water at a rated pressure of approximately 300 psig (21 Kgf/cm²) for approximately fifteen minutes while still subjected to the flame.

To qualify for use in a fire fighting pipe application, the pipe and/or pipe fittings must remain structurally sound when subjected to rated pressure and not show signs of leakage in excess of ten percent of the rated pipe flow. In order to determine the total pressure withstanding ability of pipes subjected to such extreme temperature conditions, and to better understand the mechanism for heat related failure, the pressure was increased on pipe and pipe fitting samples that showed no signs of pipe leakage or structural damage beyond the rated pressure until pipe failure.

The following examples illustrate different fire resistant pipes, and/or the test results for each pipe. In each of the following examples the pipe has an inside diameter of approximately two inches.

### Example No. 1 - Fiber-Reinforced Pipe

A fiber-reinforced pipe was constructed using twelve layers of a fiber-reinforced resin, forming a wall thickness of approximately 0.37 centimeters (cm). The structural pipe wall was formed using fiberglass reinforcing fiber windings bonded together with a siloxane-modified phenolic resin, comprising approximately 83 percent by weight BP-J2027L (phenolic resole resin), 9 percent by weight SY-231 (methoxy-functional silicone intermediate), 7 percent by weight Phencat 381 (latent acid catalyst), 0.6 percent by weight Melacure Cotlin T-1 (organotin catalyst), and 0.4 percent by weight ethyl aminoethanol (amine catalyst). This pipe did not include a fire resistant layer.

The pipe was subjected to the above-identified test and showed signs of water leakage at a rate of approximately 0.008 cubic meters per hour (m³/h) at line pressure, and leaked water at a rate of approximately 0.21 m³/h when pressurized to between 14 to 21 Kgf/cm². The pipe failed at a pressure of approximately 35 Kgf/cm². The mode of pipe failure was a rupture in the fiber-reinforcing component of the structural pipe wall.

### Example No. 2 - Fire-Resistant Pipe

A fiber-reinforced pipe was constructed in a similar manner as that described for Example No. 1, except that the structural pipe wall thickness was approximately 0.40 cm. Additionally, the pipe was constructed having two fire resistant layers disposed around the outside surface of the structural pipe wall. The fire resistant layers were formed from C-Veil impregnated with the same resin blend that was used to form the structural pipe wall. The fire resistant layers had a total wall thickness of approximately 0.21 cm.

The pipe was subjected to the above-identified test and showed slight signs of water leakage at a rate of approximately 0,0045 m³/h at line pressure, and leaked water at a rate of approximately 0.025 m³/h when pressurized to between 14 to 21 Kgf/cm². The pipe failed at a pressure of approximately 84 Kgf/cm². The mode of pipe failure was a rupture in the fiber-reinforcing component of the structural pipe wall. This pipe construction did not pass the test but displayed an improved resistance to the effects of the flame test when compared to the fiber reinforced pipe of Example No. 1.

### Example No. 3 - Fire Resistent Pipe

A fiber-reinforced pipe was constructed in a similar manner as that described for Example No. 1, except that the structural pipe wall thickness was approximately 0.38 cm. Additionally, the pipe was constructed having four fire resistant layers disposed around the outside surface of the structural pipe wall. The fire resistant layers were formed from the same materials as that described for Example No. 2. The fire resistant layers had a total wall thickness of approximately 0.33 cm.

The pipe was subjected to the above-identified test and showed no signs of water leakage at line pressure, showed slight signs of water leakage at a rate of approximately 0.016 m³/h when pressurized to approximately 31.6 Kgf/cm². The pipe failed at a pressure of approximately 126 Kgf/cm². The mode of pipe failure was cracking in the resin matrix of the structural pipe wall and resulting leakage. No structural failure of the fiber reinforcement occurred. This example illustrates the improved heat resistance provided by two additional fire resistant layers when compared to Example No. 2.

### Example No. 4 - Fire Resistant Pipe

A fiber-reinforced pipe was constructed in a similar manner as that described for Example No. 1, except that the structural pipe wall thickness was approximately 0.36 cm. Additionally, the pipe was constructed having eight fire resistant layers disposed around the outside surface of the structural pipe wall. The fire resistant layers were formed from a Nexus material impregnated with the same resin as that described for Examples Nos. 2 and 3. The fire resistant layers had a total wall thickness of approximately 0.2 cm.

The pipe was subjected to the above-identified test and showed slight signs of water leakage at a rate of approximately 0.02 psig, showed signs of water leakage at a rate of approximately 0.04 m³/h when pressurized to between 14 to 21 Kgf/cm². The pipe failed at a pressure of approximately 80 Kgf/cm². The mode of pipe failure was a rupture in the fiber component of the structural pipe wall. This example illustrates the relatively improved heat resistance afforded by the C-Veil fire resistant layers of Example No. 2, and demonstrates the improved heat resistance provided by the Nexus fire resistant layers when compared with the non-protected pipe of Example No. 1.

### Example No. 5 - Fire Resistant Pipe

A fiber-reinforced pipe was constructed having six layers of fiber-reinforced resin of the same fiber and resin components disclosed above for Example No. 1, and having a wall thickness of approximately 0.18 cm. Additionally, the pipe was constructed having four fire resistant layers disposed around the outside surface of the structural pipe wall. The fire resistant layers were formed from the same materials as that described for Example Nos. 2 and 3. The fire resistant layers had a total wall thickness of approximately 0.33 cm.

The pipe was subjected to the above-identified test and leaked water at a rate of approximately 0.032 m³/h at line pressure, and leaked water at a rate of approximately 0.31 m³/h when pressurized to between 14 to 21 Kgf/cm². The pipe failed at a pressure of approximately 35 Kgf/cm². The mode of pipe failure was a rupture in the fiber component of the structural pipe wall. When compared to Example No. 3, this example illustrates the improved heat resistance that is achieved when the structural pipe wall is formed from twelve rather than six fiber-reinforced resin layers.

### Example No. 6 - Fire Resistant Pipe

A fiber-reinforced pipe was constructed having twelve layers of a fiber-reinforced resin of the same fiber and resin components disclosed above for Example No. 1. The structural pipe wall had a wall thickness of approximately 0.38 cm. The pipe was constructed having two fire resistant layers disposed around the outside surface of the structural pipe wall. The fire resistant layers were formed from C-Veil impregnated with the same resin that was used to form the structural pipe wall. The fire resistant layers had a total wall thickness of approximately 0.18 cm.

The pipe was subjected to the above-identified test and showed no signs of water leakage at line pressure, and showed slight signs of water leakage at a rate of approximately 0.007 m³/h when pressurized to between 14 to 21 Kgf/cm². The pipe failed at a pressure of approximately 112 Kgf/cm². The mode of pipe failure was cracking in the resin matrix of the structural pipe wall. No structural failure of the fiber reinforcement occurred. This pipe construction displayed an improved resistance to the effects of the flame test when compared to the pipe of Example No. 2.

### Example No. 7 - Fire Resistant Pipe

A fiber-reinforced pipe was constructed in the same manner as that described for Example No. 6, having twelve layers forming the structural pipe wall. The pipe was constructed having four fire resistant layers disposed around the outside surface of the structural pipe wall. The fire resistant layers were formed from the same materials described for Example No. 6, having a total wall thickness of approximately 0.33 cm.

The pipe was subjected to the above-identified test and showed no signs of water leakage at line pressure, and showed slight signs of water leakage at a rate of approximately 0.009 m³/h at a pressure of approximately 63 Kgf/cm². The pipe failed at a pressure of approximately 133 Kgf/cm². The mode of pipe failure was a rupture in the fiber component of the structural pipe wall. This pipe construction displayed an improved resistance to the effects of the flame test when compared to the pipe of Example No. 3.

### Example No. 8 - Fire Resistant Pipe

A fiber-reinforced pipe was constructed in the same manner as that described for Example Nos. 6 and 7, having twelve layers forming the structural pipe wall, and having a wall thickness of approximately 0.38 cm. The pipe was constructed having six fire resistant layers disposed around the outside surface of the structural pipe wall. The fire resistant layers were formed from the same materials described for Example Nos. 6 and 7, having a total wall thickness of approximately 0.45 cm.

The pipe was subjected to the above-identified test and showed no signs of water leakage at line pressure, and showed slight signs of water leakage at a rate of approximately 0.004 m³/h at a pressure of approximately 60 Kgf/cm². The pipe failed at a pressure of approximately 161 Kgf/cm². The mode of pipe failure was discovered to cracking of the resin matrix of the structural pipe wall. No structural failure of the fiber reinforcement occurred. This example illustrates the improved heat resistance afforded by six fire resistant layers when compared to the fire resistant pipe of Example No. 7, having four fire resistant layers.

### Example No. 9 - Fire Resistant Pipe

A fiber-reinforced pipe was constructed in the same manner as that described for Example Nos. 6, 7 and 8, having twelve layers forming the structural pipe wall, and having a wall thickness of approximately 0.37 cm. The pipe was constructed having eight fire resistant layers disposed around the outside surface of the structural pipe wall. The fire resistant layers were formed from the same materials described for Example Nos. 6, 7 and 8, having a total wall thickness of approximately 0.55 cm.

The pipe was subjected to the above-identified test and showed no signs of water leakage at line pressure, and showed no signs of water leakage at a pressure of approximately 204 Kgf/cm². The pipe failed at a pressure of approximately 250 Kgf/cm². The mode of pipe failure was cracking of the resin matrix of the structural pipe wall. Again, no structural failure of the fiber reinforcement occurred. This example illustrates the improved heat resistance afforded by eight fire resistant layers when compared to the fire resistant pipe of Example No. 8, having six fire resistant layers.

### Example No. 10 - Fire Resistant Pipe

A fiber-reinforced pipe was constructed in the same manner as that described for Example Nos. 6-9, having twelve layers forming the structural pipe wall, and having a wall thickness of approximately 0.37 cm. The pipe was constructed having a total of six fire resistant layers disposed around the outside surface of the structural pipe wall. The fire resistant layers comprise, moving outwardly away from the structural pipe wall, two layers of C-Veil, followed by two layers of Nexus, followed by two layers of C-Veil. The resin component for each of the fire resistant layers is the same as that used to form the structural pipe wall. The fire resistant layers have a total wall thickness of approximately 0.35 cm.

The pipe was subjected to the above-identified test and showed no signs of water leakage at line pressure, and showed slight signs of water leakage at a rate of approximately 0.025 m³/h at a pressure of approximately 77 Kgf/cm². The pipe failed at a pressure of approximately 147 Kgf/cm². The mode of pipe failure was cracking of the resin matrix of the structural pipe wall. This example illustrates the improved heat resistance afforded by using a combination of different fire resistant layers when compared to the fire resistant pipe of Example No. 8, having six of the same type of fire resistant layers.

### Example No. 11 - Fire Resistant Pipe

A fiber-reinforced pipe was constructed in the same manner as that described for Example Nos. 6-10, having twelve layers forming the structural pipe wall, and having a wall thickness of approximately 0.41 cm. The pipe was constructed having a total of eight fire resistant layers disposed around the outside surface of the structural pipe wall. The fire resistant layers were all formed from the Nexus material immersed in the same resin component as that used to form the structural pipe, and had a total wall thickness of approximately 0.22 cm.

The pipe was subjected to the above-identified test and showed slight signs of water leakage at line pressure, and showed slight signs of water leakage at a rate of approximately 0.016 m³/h at a pressure of between 14 to 21 Kgf/cm². The pipe failed at a pressure of approximately 91 Kgf/cm². The mode of pipe failure was a rupture in the fiber component of the structural pipe wall.

### Example No. 12 - Fire Resistant Pipe

A fiber-reinforced structural pipe was constructed using the same fiber and resin components as that used in the previous examples. The structural pipe wall was formed from twelve layers of the fiber-reinforced resin and had a wall thickness of approximately 0.4 cm. The pipe was constructed having a total of eight layers of polyethylene disposed around the outside surface of the structural pipe wall. The polyethylene layers had a total wall thickness of approximately 1.2 millimeters. A total of four outside fiber-reinforced resin layers were formed from the same materials as the structural pipe wall, and were disposed around the outside surface of the polyethylene layer. The outside fiber-reinforced resin layers had a total wall thickness of approximately 0.13 cm.

The pipe was subjected to the above-identified test and showed no signs of water leakage at line pressure, and no signs of leakage at twice the rated pressure (21 Kgf/cm²). The pipe showed first signs of leakage at approximately 108 Kgf/cm², leaking at a rate of approximately 31 m³/hr. The pipe failed at a pressure of approximately 715 Kgf/cm². The mode of pipe failure was a rupture in the fiber component of the structural pipe wall. This example illustrates the improved heat resistance afforded by using the polyethylene energy absorbing material layer in place of the fire resistant layer.

### Example No. 13 - Fiber-Reinforced Pipe

A two inch (51 millimeter) diameter fiber-reinforced structural pipe wall was constructed comprising approximately twelve layers of a fiber-reinforced resin, prepared as set forth in Example No. 1 above. The impact resistance of the structural pipe wall was tested by dropping a 60 mm steel ball, weighing 0.9 kg from progressive heights to impact the pipe perpendicularly. After the impacts were completed the pipe was pressurized with air at a pressure of 25 psig and held under water for detection of visible air leaks.

Under these test conditions the unjacketed structural pipe wall displayed a 75 percent probability of failure, i.e., three of the four impacts leaked air, after four drops from a ball drop height of approximately 10 inches (25 centimeters). The same unjacketed structural pipe wall displayed complete or a 100 percent probability of failure, i.e., each of the four impacts leaked air, after four drops when the ball drop height was further increased to 12 inches (30 centimeters).

### Example No. 14 - Fire Resistant Pipe according to the invention

A two inch diameter structural pipe wall was constructed according to Example No. 13 above, and a jacket was disposed around the structural pipe wall to form a fire resistant pipe. The jacket was formed from approximately four each repeating layers of polypropylene tape and fiber-reinforced resin. The fiber-reinforced resin layers were formed from the same materials used to form the structural pipe wall.

The impact resistance of the fire resistant pipe so formed was tested according to the above-described method. The fire resistant pipe did not display any signs of air leakage, i.e., zero percent probability of failure, until a ball drop height of approximately 89 cm (35 inches) was reached. At 89 cm (35 inches), only one impact out of eight showed any signs of leakage. At drop heights of 101 cm and 137 cm (40 and 54 inches), only three impacts out of eight and therefore, a fifty percent probability of failure for the jacketed pipe was observed to occur at approximately 114 cm (45 inches), compared to 25 cm or 28 cm (10 or 11 inches) with the unjacketed structural pipe wall. Accordingly, based on such test data, the jacketed pipe displayed a 400 percent improvement in impact resistance when compared to an unjacketed pipe.

## Claims

1. A fire resistant pipe (38) comprising:
a structural wall (42) comprising layers of helically wound reinforcing fiber bonded with a resin selected from the group consisting of phenolic resins, siloxane-modified phenolic resins, furan resins, and mixtures thereof; and
a jacket (46) disposed around the structural wall (42) and having at least one fiber-reinforced resin layer (44) **characterised in that** the jacket (46) includes at least one release layer (40) of material that is chemically incompatible with the resin used to form the structural wall and on whose outer surface the fiber-reinforced resin layer (44) is disposed

2. A fire resistant pipe according to claim 1 **characterised in that** the jacket (46) comprises a number of alternating release and fiber-reinforced resin layer (40, 44)

3. A fire resistant pipe according to claim 1 or to claim 2 **characterised in that** the fiber-reinforced resin layer (44) comprises helically wound reinforcing fibers bonded with a resin selected from the group consisting of phenolic resins, siloxane-modified phenolic resins, furan resins, and mixtures thereof.

4. A fire resistant pipe according to any one of claims 1 to 3 **characterised in that** the release layer (40) is formed from a polyolefinic material.

5. A fire resistant according to claim 4 **characterised in that** the release layer (40) is formed from material adapted to absorb heat energy by undergoing a phase change.

6. A fire resistant pipe according to any of the preceding claims **characterised in that** the fiber component used to form the structural wall (42) is selected from the group consisting of glass, carbon, and combinations thereof.

7. A fire resistant pipe according to any preceding claim **characterised in that** the resin used to form the structural wall (42) and the fibre reinforced resin layer (44) are both siloxane-modified phenolic resins.

8. A method for forming a fire resistant pipe comprising the steps of:
helically winding reinforcing fiber wetted with a resin selected from the group consisting of phenolic resins, siloxane-modified phenolic resins, furan resins, and mixtures thereof, for forming a structural pipe wall (42) and
forming a jacket (46) around an outside surface of the structural pipe wall (42) **characterised in that** the step of forming a jacket includes the steps of placing a release material (40) around the outside surface of the structural pipe wall (42) and placing a fiber-reinforced resin layer (44) over the release material (40) wherein the release material (40) is formed from a material that is incapable of forming a bond with resins used to form both the structural pipe wall (42) and the fiber-reinforced resin layer (44); and
curing the resin in both the structural pipe wall and the fiber-reinforced resin layer (44).

9. A method according to claim 8 **characterised in that** during the step of forming the jacket (46) the release material (40) is selected from the group consisting of materials capable of absorbing energy by phase transformation at a temperature below a degradation temperature of the structural pipe wall.

10. A method according to claim 8 or to claim 9 **characterised in that** during the step of forming a jacket (46) alternating release layers (40) and fiber-reinforced resin layers (44) are disposed over the structural pipe wall (42).

## Patentansprüche

1. Feuerfestes Rohr (38) bestehend aus:
einer strukturellen Wand (42), die Schichten von spiralförmig aufgewickelter Verstärkungsfaser um fasst, die mit einem Harz verklebt sind, das aus einer Gruppe von Phenolharzen, mit Siloxan modifizierten Phenolharzen, Furanharzen und Mischungen daraus ausgewählt ist; und
einem Mantel (46), der um die strukturelle Wand (42) herum angeordnet ist und wenigstens eine faserverstärkte Harzschicht (44) aufweist, **dadurch gekennzeichnet, dass** der Mantel (46) wenigstens eine Ablöseschicht (40) aus Material einschließt, das mit dem zur Bildung der struktrurellen Wand verwendeten Harz inkompatibel ist und auf dessen Außenfläche die faserverstärkte Harzschicht (44) angeordnet ist.

2. Feuerfestes Rohr nach Anspruch1, **dadurch gekennzeichnet, dass** der Mantel (46) eine Reihe von abwechselnden Ablöseschichten und faserverstärkten Schichten (40,44) umfasst.

3. Feuerfestes Rohr nach Anspruch 1 oder Anspruch 2, **dadurch gekennzeichnet, dass** die faserverstärkte Harzschicht (44), spiralförmig gewickelte Verstärkungsfasern umfasst, die mit einem Harz verklebt sind, das aus einer Gruppe von Phenolharzen, mit Siloxan modifizierten Phenolharzen, Furanharzen und Mischungen daraus ausgewählt ist.

4. Feuerfestes Rohr nach einem beliebigen der Ansprüche 1 bis 3, **dadurch gekennzeichnet, dass** die Ablöseschicht (40) aus einem Polyolefinmaterial geformt ist.

5. Feuerfestes Rohr nach Anspruch 4, **dadurch gekennzeichnet, dass** die Ablöseschicht (4o) aus Material geformt ist, das adaptiert ist Wärmeenergie zu absorbieren, indem es eine Phasenänderung durchläuft.

6. Feuerfestes Rohr nach einem beliebigen der vorhergehenden Ansprüche, **dadurch gekennzeichnet, dass** die zum Formen der strukturellen Wand (42) verwendete Faserkomponente aus der Gruppe ausgewählt wird, die Glas, Kohlenstoff und Kombinationen davon umfasst.

7. Feuerfestes Rohr nach einem beliebigen vorhergehenden Anspruch, **dadurch gekennzeichnet, dass** das zum Formen der strukturellen Wand (42) und der faserverstärkten Harzschicht (44) verwendete Harz beide mit Siloxan modifizierte Phenolharze sind.

8. Verfahren zur Herstellung eines feuerfesten Rohrs, das folgende Schritte umfasst:
spiralförmiges Wickeln von Verstärkungsfaser, die mit einem Harz benetzt ist, das aus einer Gruppe von Phenolharzen, mit Siloxan modifizierten Phenolharzen, Furanharzen und Mischungen daraus ausgewählt ist, um eine strukturelle Rohrwand (42) zu formen; und
Formen eines Mantels (46) um eine Außenfläche der strukturellen Rohrwand (42), **dadurch gekennzeichnet, dass** der Schritt des Formens eines Mantels die Schritte der Platzierung eines Ablösematerials (40) um die Außenfläche der strukturellen Rohrwand (42) und der Platzierung einer faserverstärkten Harzschicht (44) über das Ablösematerial (40) einschließt, wobei das Ablösematerial (40) aus einem Material geformt ist, das nicht in der Lage eine Bindung mit Harzen zu formen, die zum Formen von sowohl der strukturellen Rohrwand (42) als auch der faserverstärkten Harzschicht (44) verwendet werden; und
Aushärten des Harzes in sowohl der strukturellen Rohrwand als auch der faserverstärkten Schicht (44).

9. Verfahren nach Anspruch 8, **dadurch gekennzeichnet, dass** beim Schritt des Formens des Mantels (46) das Ablösematerial (40) aus der Gruppe ausgewählt wird, die aus Materialien besteht, die Energie durch Phasentransformation bei einer Temperatur absorbieren können, die unterhalb einer Degradationstemperatur der strukturellen Rohrwand liegt.

10. Verfahren nach Anspruch 8 oder nach Anspruch 9, **dadurch gekennzeichnet, dass** beim Schritt des Formens eines Mantels (46) abwechselnde Ablöseschichten (40) und faserverstärkte Harzschichten (44) über der strukturellen Rohrwand (42) angeordnet werden.

## Revendications

1. Un tuyauterie ignifuge (38) comprenant:
une paroi structurale (42) comprenant des couches de fibre de renforcement enroulées en hélice collées avec une résine choisie dans un groupe consistant en résines phénoliques, résines phénoliques modifiées au siloxane, résines furaniques et les mélanges de celles-ci; et
une gaine (46) disposée autour de la paroi structurale (42) et ayant au moins une couche de résine à renforcement de fibre (44) **caractérisée en ce que** la gaine (46) comprend au moins une couche (40) de libération d'une matière incompatible avec la résine utilisée pour former la paroi structurale et la couche de résine à renforcement de fibre (44) étant disposée sur la surface extérieure de cette couche (40).

2. Une tuyauterie ignifuge selon la revendication 1, **caractérisée en ce que** la gaine (46) comprend un nombre de couches de libération alternant avec un nombre de couches de résine à renforcement de fibre (40, 44).

3. Une tuyauterie ignifuge selon la revendication 1 ou 2, **caractérisée en ce que** la couche de résine à renforcement de fibre (44) comprend des fibres de renforcement enroulées en hélice collées avec une résine choisie dans le groupe des résines phénoliques, résines modifiées au siloxane, résines furaniques et les mélanges de celles-ci.

4. Une tuyauterie ignifuge selon l'une quelconque des revendications 1 à 3, **caractérisée en ce que** la couche de libération (40) est formée d'une matière polyoléfine.

5. Une tuyauterie ignifuge selon la revendication 4, **caractérisée en ce que** la couche de libération (40) est formée d'une matière adaptée pour absorber l'énergie thermique en subissant un changement de phase.

6. Une tuyauterie ignifuge selon l'une quelconque des revendications précédentes, **caractérisée en ce que** le composé de fibre utilisé pour former la paroi structurale (42) est choisi dans un groupe consistant en verre, carbone et les combinaisons de ceux-ci.

7. Une tuyauterie ignifuge selon l'une quelconque des revendications précédentes, **caractérisée en ce que** la résine utilisée pour former la paroi structurale (42) et la couche de résine renforcée de fibre (44) sont l'une et l'autre des résines phénoliques modifiées au siloxane.

8. Une méthode pour former une tuyauterie ignifuge comprenant les étapes suivantes:
enroulant en hélice la fibre de renforcement mouillée avec une résine choisie dans le groupe contenant des résines phénoliques, des résines phénoliques modifiées au siloxane, des résines furaniques et des mélanges de celles-ci, pour former une paroi structurale de tuyauterie (42) et
formant une gaine (46) autour d'une surface extérieure de la paroi structurale (42) de la tuyauterie **caractérisée en ce que** l'étape de former une gaine comprend les étapes de placer une matière de libération (40) autour de la surface extérieure de la paroi structurale (42) de la tuyauterie et de placer une couche de résine à renforcement de fibre (44) sur la matière de libération (40) dans laquelle la matière de libération (40) est formée d'une matière incapable de se lier aux résines utilisées pour former la paroi structurale (42) de la tuyauterie et à la couche de résine renforcée de fibres (44); et
polymérisant la résine à la fois dans la paroi structurale de tuyauterie (42) et la couche de résine renforcée de fibre (44).

9. Une méthode selon la revendication 8, **caractérisée en ce que,** durant l'étape de formation de la gaine (46), la matière de libération (40) est choisie dans un groupe consistant en matériaux capables d'absorber l'énergie par transformation de phase à une température en-dessous d'une température de dégradation de la paroi structurale de l'énergie.

10. Une méthode selon la revendication 8 ou la revendication 9, **caractérisée en ce que,** durant l'étape de formation de la gaine (46), des couches de libération (40) et des couches de résines à renforcement de fibres (44) sont disposées sur la paroi structurale (42) de la tuyauterie.
